# EUROPEAN PATENT SPECIFICATION

(11) **EP 3 620 329 B1**
(45) Date of publication and mention of the grant of the patent: **24.03.2021**
(21) Application number: 18193163.5
(22) Date of filing: 07.09.2018
(51) Int. Cl.: B60Q 1/00, F21S 41/148, F21S 41/24, F21S 41/365, F21S 41/663, F21S 41/32, F21S 41/265, F21S 43/14, F21S 43/237, F21S 43/243, B62J 6/02

(54) **VEHICLE LAMP ASSEMBLY**
FAHRZEUGLAMPENANORDNUNG
ASSEMBLAGE DE LAMPE DE VÉHICULE

(43) Date of publication of application: 11.03.2020
(73) Proprietor: T.Y.C. Brother Industrial Co., Ltd., Tainan City 70248 (TW)
(72) Inventor: SHIH, Ming-Chih, 70248 Tainan City (TW)
(74) Representative: Stöckeler, Ferdinand

(56) References cited:
- EP-A2- 2 878 486
- DE-A1-102014 226 650
- JP-A- 2012 134 174
- JP-A- 2014 059 982
- JP-A- 2014 060 085
- JP-A- 2015 088 375
- KR-A- 20150 134 876
- US-A1- 2007 047 249
- US-A1- 2015 023 040
- US-A1- 2015 167 912

## Description

The disclosure relates to a vehicle lamp assembly.

Document US 2015/167912 A1 discloses a head lamp which has a main lens, and a decoration lens surrounding the main lens. Light rays emitted from light resources are reflected by main reflectors and sub reflectors to pass through the main lens and the decoration lens, wherein the decoration lens protrudes sidewardly from the main lens.

Document EP 2 878 486 A2 discloses a vehicle lamp assembly comprising two vehicle lamps, each of the two vehicle lamps comprising a lighting unit, a lens disposed in front of said lighting unit for radiating forwardly light rays received from said lighting unit, an optical transparent member protruding sidewardly from said lens; and a light directing unit disposed between said lighting unit and said optical transparent member for forwardly directing a part of light rays emitted from said lighting unit to said optical transparent member, said optical transparent member radiating forwardly the light rays received from said light directing unit, whereby a light emitting area of said vehicle lamp is increased, wherein said optical transparent members of said vehicle lamps are disposed between said lenses of said vehicle lamps, with a distance between said optical transparent members.

Document US 2007/047249 A1 discloses a front light having a projector lamp arranged behind an outer lens. Two high beam lamps are disposed between the low beam lamps, wherein left and right isolated extension sections respectively extend outward from the low beam lamps. A light guiding body is disposed at the bottom of the high beam lamps and the low beam lamps.

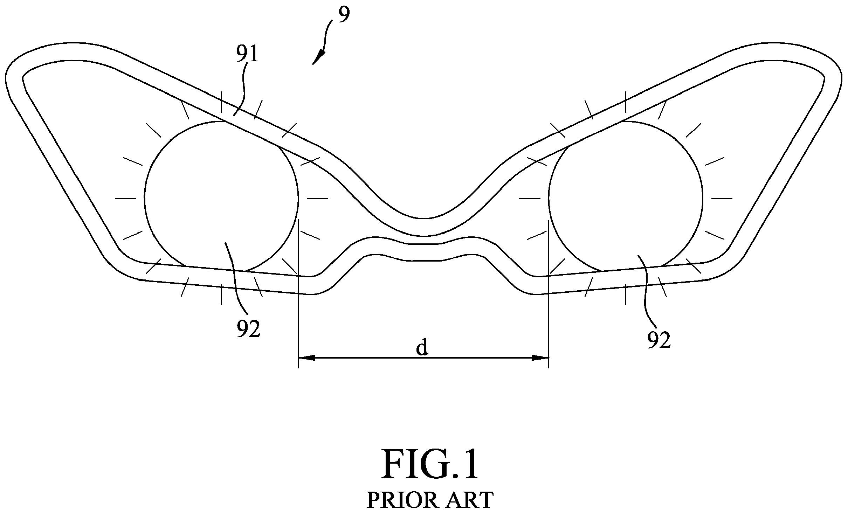

Figure 1 illustrates a conventional vehicle lamp 9 for mounting to a motorcycle. The conventional vehicle lamp 9 includes a housing 91 and two left-right spaced-apart lighting units 92 disposed in the housing 91. A distance (d) between boundaries of light-emitting areas of the two lighting units 92 is generally greater than 75 mm. According to Economic Commission for Europe (ECE) regulations, because the distance (d) is greater than 75 mm, each lighting unit 92 is regarded as an individual vehicle lamp. In an optical test, each lighting unit 92 is independently activated and tested to examine whether or not the requirements of Class D headlamp according to the ECE regulations can be fulfilled. Because each lighting unit 92 must overcome the test, high precision optical design and high precision manufacturing operations are needed for each lighting unit 92, thereby increasing manufacturing complexity and cost.

Based on the ECE regulations, if the distance (d) between the boundaries of the light-emitting areas of the two lighting units 92 is smaller than 75 mm, the two lighting units 92 can be declared as a single lamp, and thus can be simultaneously activated to test whether or not the two lighting units 92 put together can fulfill the requirements of Class D headlamps. As the two lighting units 92 need not be separately and singly tested, it is advantageous to reduce design complexity and fabrication costs. Thus, it is desirable to reduce the distance between the boundaries of the light emitting areas of the two lighting units 92 for enabling the two lighting units to be regarded as a single lamp, while still allowing the distance between the two lighting units 92 to maintain unchanged.

Therefore, an object of the invention is to provide a vehicle lamp assembly that can alleviate at least one of the drawbacks of the prior art.

According to the invention, this object is solved with a vehicle light assembly according to claim 1.

Other features and advantages of the invention will become apparent in the following detailed description of the embodiment with reference to the accompanying drawings, of which:
Figure 1 illustrates a conventional vehicle lamp;
Figure 2 is an exploded perspective view of an embodiment of a vehicle lamp of the vehicle lamp assembly according to the invention;
Figure 3 is an exploded perspective view of the embodiment, taken from another view angle;
Figure 4 is a sectional view of the embodiment;
Figure 5 is a sectional view of the embodiment illustrating light paths (A) and (B) of the vehicle lamp;
Figure 6 is a perspective view illustrating the light path (A) of the vehicle lamp of the embodiment; and
Figure 7 is a front view illustrating two vehicle lamps of the vehicle lamp assembly according to the invention disposed at left and right sides .

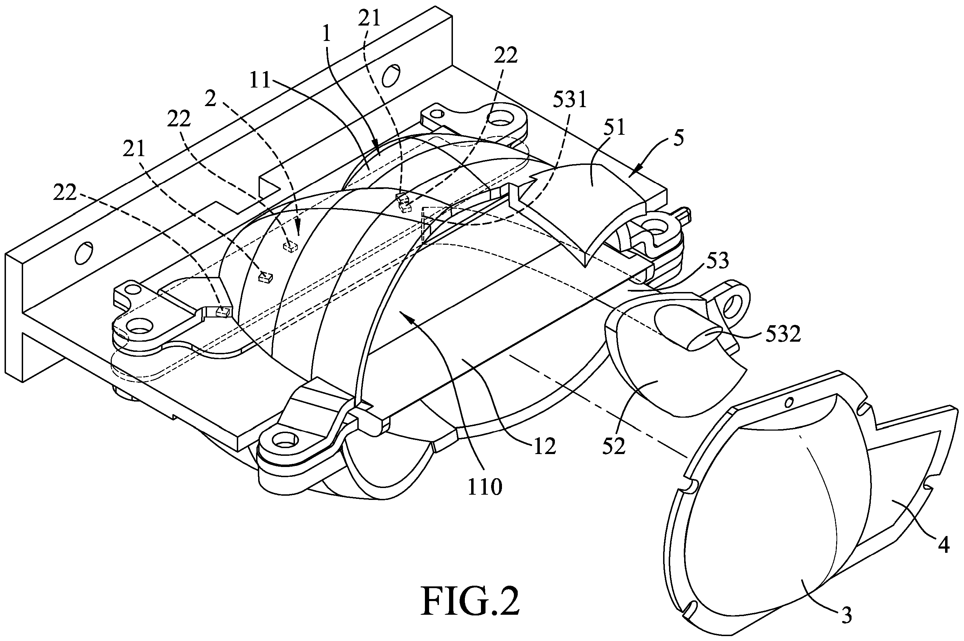

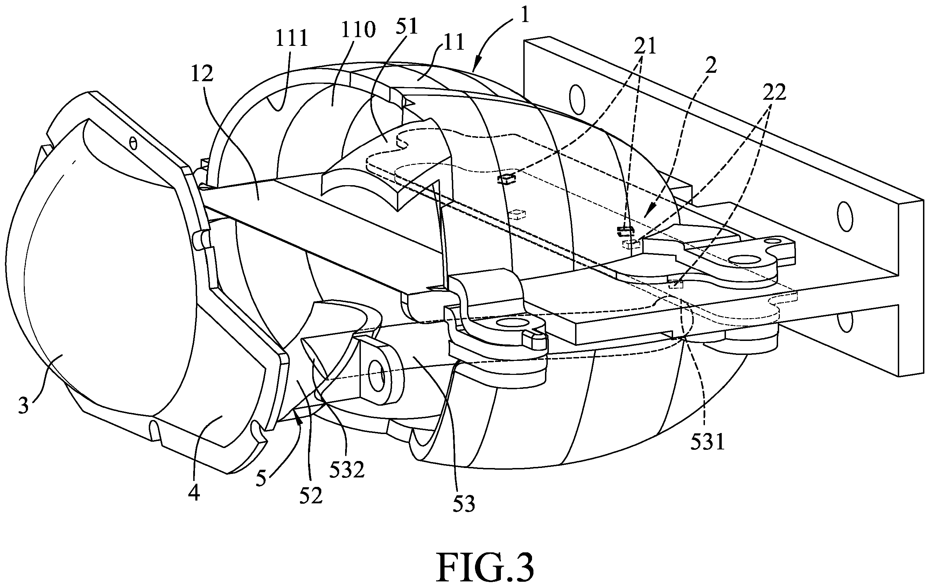

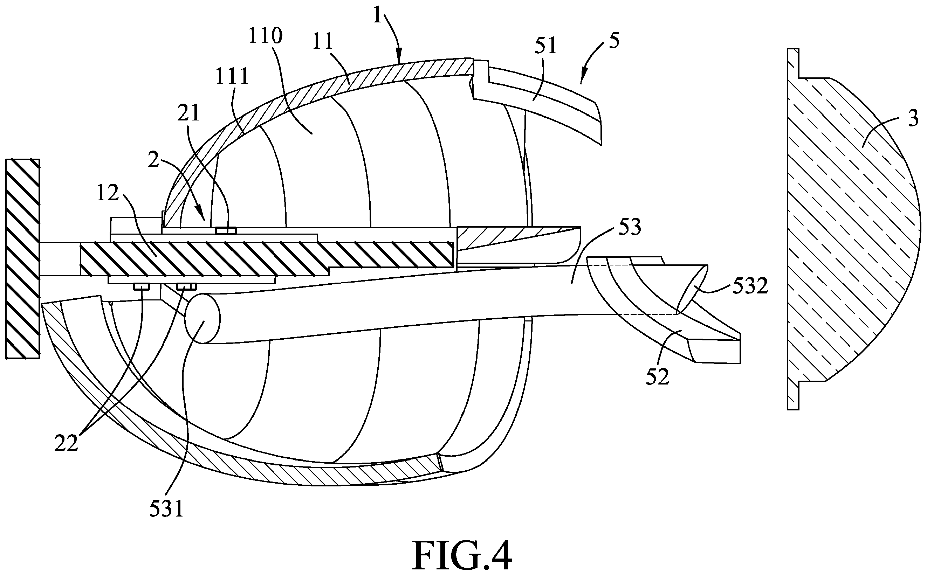

Referring to Figures 2 to 4, an embodiment of a vehicle lamp of the vehicle lamp assembly according to the invention is shown as, but not limited to, a motorcycle headlight. The vehicle lamp includes a reflective housing 1, a lighting unit 2, a lens 3, an optical transparent member 4 and a light directing unit 5.

The reflective housing 1 is composed of a plurality of housing components, and has a housing wall 11 and a partition wall 12. The housing wall 11 has a reflective surface 111 and an installation space 110 bounded by the reflective surface 111. The partition wall 12 extends horizontally and divides the installation space 110 into two regions arranged one above the other. The reflective surface 111 reflects part of light rays from the lighting unit 2 toward the lens 3.

The lighting unit 2 is installed in the installation space 110, and includes a plurality of first light emitters 21 and second light emitters 22. The first light emitters 21 are mounted on a top surface of the partition wall 12 and are spaced apart from each other in a left-right direction of the lighting unit 2. The second light emitters 22 are mounted on a bottom surface of the partition wall 12 and are spaced apart from each other in the left-right direction. Each first light emitter 21 produces a low beam light. Each second light emitter 22 produces a high beam light. Notably, there can be one first light emitter 21 and one second light emitter 22 in some embodiments.

The lens 3 is disposed in front of the lighting unit 2 for radiating forwardly light rays received from the lighting unit 2 to effect lighting. In this embodiment, the lens 3 is a convex lens providing a light condensation effect.

The optical transparent member 4 protrudes sidewardly from one side of the lens 3. The lens 3 and the optical transparent member 4 are juxtaposed with each other along the left-right direction. In implementing the vehicle lamp, the optical transparent member 4 may be connected to one of left and right sides of the lens 3. In this embodiment, the lens 3 and the optical transparent member 4 are made from a same light transmitting material and are integrally formed as one piece with each other.

The light directing unit 5 is disposed between the lighting unit 2 and the optical transparent member 4 for forwardly directing part of light rays emitted from the lighting unit 2 to the optical transparent member 4. The optical transparent member 4 radiates forwardly the light rays received from the light directing unit 5, whereby a light emitting area of the vehicle lamp of the disclosure is increased. In this embodiment, the light directing unit 5 includes a first reflective member 51, a second reflective member 52 and a light guide rod 53.

The first reflective member 51 is disposed at a position anterior to and higher than the lighting unit 2, and protrudes integrally and forwardly from the reflective housing 1 toward the optical transparent member 4. The first reflective member 51 has a reflective surface facing downwardly to reflect and focus part of light rays emitted from the lighting unit 2 to a point, thereby forming a virtual light source.

The second reflective member 52 is anterior to the first reflective member 51. In this embodiment, the second reflective member 52 has a front end proximal to the optical transparent member 4, a rear end below a front end of the first reflective member 51, and a reflective surface facing upwardly. The reflective surface of the second reflective member 52 reflects light rays of the virtual light source to the optical transparent member 4.

The light guide rod 53 is disposed between the lighting unit 2 and the optical transparent member 4. In this embodiment, the light guide rod 53 has a light enter surface 531 proximal to the second light emitters 22, and a light exit surface 532 proximal to the optical transparent member 4. As such, the guide rod 53 is able to guide part of light rays from the second light emitters 22 to the optical transparent member 4.

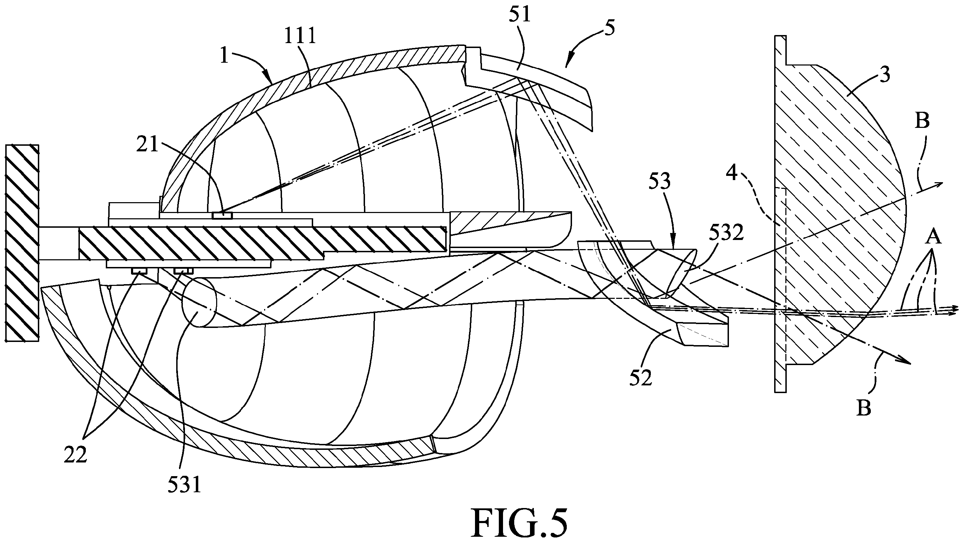

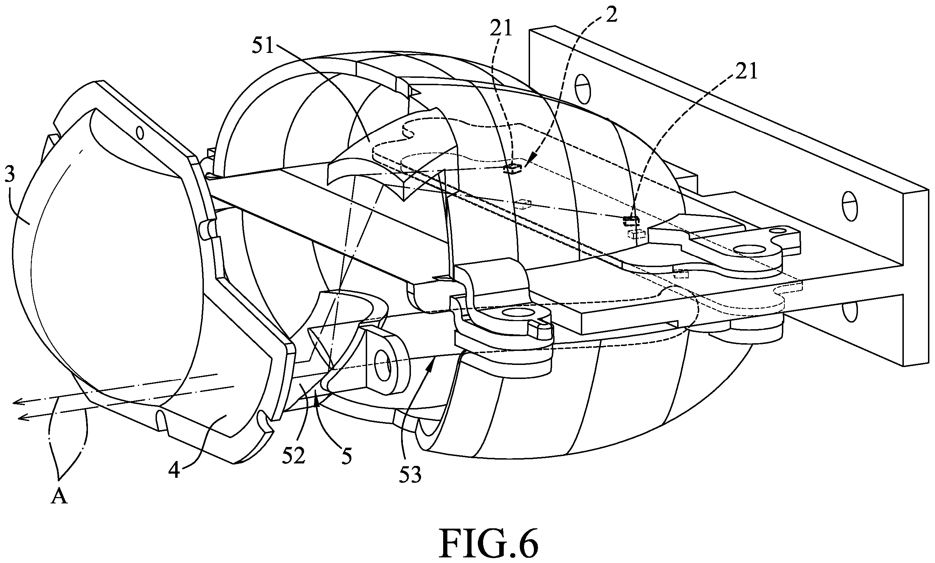

Referring to Figures 5 and 6, to produce the low beam light, the first light emitters 21 are activated while the second light emitters 22 are deactivated. The first light emitters 21 emit light rays upwardly to a top portion of the reflective surface 111 above the partition wall 12. Part of the light rays from the first light emitters 21 are reflected by the top portion of the reflective surface 111 toward the lens 3 to emit a low beam light (not shown) . Part of the light rays from the first light emitters 21 are radiated to and reflected by the first reflective member 51 (see light path (A) shown in Figs. 5 and 6) toward the second reflective member 52. The second reflective member 52 reflects the light rays from the first reflective member 51 toward the optical transparent member 4. The optical transparent member 4 radiates forwardly the light rays along the light path (A) . As such, a region in front of the optical transparent member 4 is illuminated. The optical transparent member 4 associated with the lens 3 increases the overall light emitting area of the vehicle lamp, compared to a conventional vehicle lamp. In the conventional vehicle lamp, when a low beam light is turned on, illumination above a cut-off line is generally insufficient, thereby forming a dark region, which cannot sufficiently illuminates higher street names or road signs. This can lead to unsafe driving. By virtue of the structure and design of the combined first and second reflective members 51, 52, light rays radiated forwardly by the optical transparent member 4 can be directed to the dark region slightly above the cut-off line, thereby assisting in illuminating the dark region and enhancing driving safety.

When the second light emitters 22 are turned on, the vehicle lamp is switched to the high beam light mode. On the other hand, when an optical test is carried out before the vehicle lamp assembly leaves the factory, the first and second light emitters 22 can be simultaneously turned on or activated. However, during driving, the low beam light mode of the vehicle lamp is deactivated, and the second light emitters 22 radiate light rays downwardly. Part of the light rays from the second light emitters 22 are reflected by a bottom portion of the reflective surface 111 toward the lens 3 to form a high beam pattern (not shown) . As shown in Figure 5, part of light rays from the second light emitters 22 enter into the light guide rod 53 through the light enter surface 531 of the light guide rod 53 as shown by lines of light path (B). The guide rod 53 guides the part of light rays to exit the light exit surface 532 of the light guide rod 53 toward the optical transparent member 4. The optical transparent member 4 radiates forwardly the light rays to form a lighted region in front of the optical transparent member 4. By association with the lens 3, the optical transparent member 4 increases the light emitting area of the vehicle lamp assembly.

Accordingly, no matter whether the low beam or high beam light mode is in use, with use of the optical transparent member 4 and the light directing unit 5, the light emitting area of the vehicle lamp assembly can be increased. Further, because the lighted regions formed by the optical transparent member 4 and the lens 3 overlap each other, the luminous intensity of the low beam or the high beam light can be enhanced.

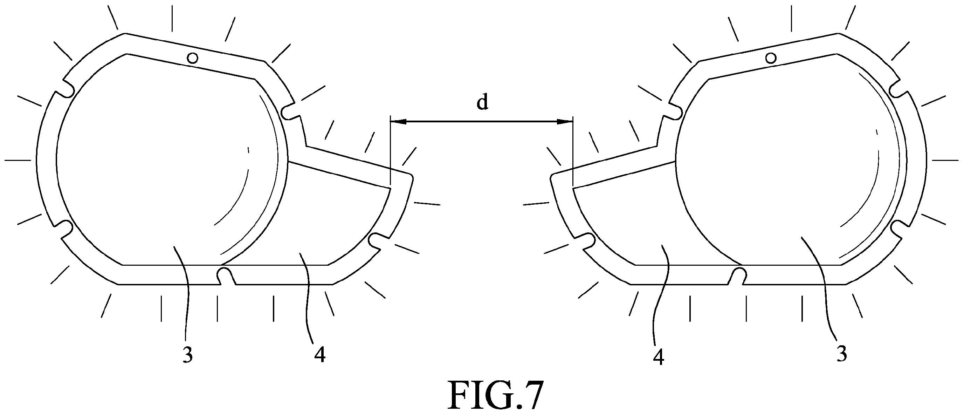

As shown in Figure 7, when two vehicle lamps of the vehicle lamp assembly according to the invention are mounted espectively to left and right sides of a vehicle in such a manner that the optical transparent members 4 are in between the vehicle lamps, the light emitting areas of the vehicle lamps increase in directions toward each other. As such, the boundaries of the light emitting areas of the two vehicle lamps approach each other, and the distance between the boundaries is reduced to a distance (d) between the optical transparent members 4, which is smaller than or equal to 75 mm. Therefore, the two vehicle lamps of the vehicle lamp assembly according to the invention can be declared as a single lamp according to the ECE regulations. During an optical test, the two vehicle lamps can be activated simultaneously to test whether or not the two vehicle lamps of the disclosure can meet the requirements of Class D headlamp according to the ECE regulations. Because it is unnecessary to individually or independently test the two vehicle lamps, the vehicle lamp of the disclosure can be designed and manufactured easily at relatively low costs . On the other hand, because the illumination requirements of headlamps according to the ECE regulations can be fulfilled with less amount of the first and second light emitters 21, 22, it is beneficial to downsize the vehicle lamp assembly according to the invention, to save energy, and to reduce the number of heat sinks (not shown) . Besides, because the two vehicle lamps of the vehicle lamp assembly according to the invention together can share energies and heat dispensation efficiencies of the light emitters, it is helpful to dissipate heat when the two vehicle lamps of the vehicle lamp assembly according to the invention are considered to be the single lamp.

While the embodiment of the vehicle lamp of the vehicle lamp assembly according to the invention is exemplified as having low beam and a high beam light modes, the vehicle lamp of the vehicle lamp assembly according to the invention having the construction capable of increasing the light emitting area as described hereinbefore can also be used as a fog lamp, a daytime running lamp, etc.

In addition, by virtue of the light directing unit 5 directing part of light rays from the first or second light emitters 21, 22 to the optical transparent member 4, the light emitting area of the vehicle lamp of the vehicle lamp assembly according to the invention is increased without using any additional lighting source. The light directing unit 5 and the optical transparent member 4 are therefore advantageous to reduce fabrication cost of the vehicle lamp assembly according to the invention.

In the description above, for the purposes of explanation, numerous specific details have been set forth in order to provide a thorough understanding of the embodiment) . It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, as long it falls under the scope of appended claims, which are solely limiting this invention.

## Claims

1. A vehicle lamp assembly comprising two vehicle lamps, each of the two vehicle lamps comprising:
a lighting unit (2);
a lens (3) disposed in front of said lighting unit (2) for radiating forwardly light rays received from said lighting unit (2);
an optical transparent member (4) protruding sidewardly from one side of said lens (3); and
a light directing unit (5) disposed between said lighting unit (2) and said optical transparent member (4) for forwardly directing a part of light rays emitted from said lighting unit (2) to said optical transparent member (4),
said optical transparent member (4) radiating forwardly the light rays received from said light directing unit (5), whereby a light emitting area of said vehicle lamp is increased,
wherein said light directing unit (5) includes a first reflective member (51) disposed at a position anterior to and higher than said lighting unit (2), when the vehicle lamp assembly is mounted to a vehicle, and a second reflective member (52) that is anterior to said first reflective member (51), said second reflective member (52) having a front end proximal to said optical transparent member (4), and a rear end that is below a front end of said first reflective member (51), said first reflective member (51) reflecting and focusing a part of light emitted from said lighting unit (2) to form a virtual light source, said second reflective member (52) reflecting light rays of the virtual light source to said optical transparent member (4),
wherein said light directing unit (5) further includes a light guide rod (53) disposed between said lighting unit (2) and said transparent member (4) to guide part of light rays from said lighting unit (2) to said optical transparent member (4),
wherein said lighting unit (2) includes at least one first light emitter (21) and at least one second light emitter (22), said first reflective member (51) reflecting part of light rays from said at least one first light emitter (21) to said second reflective member (52), said light guide rod (53) guiding part of light rays from said at least one second light emitter (22) toward said optical transparent member (4),
wherein said optical transparent members (4) of said vehicle lamps are disposed between said lenses (3) of said vehicle lamps, and a distance (d) between said optical transparent members (4) is smaller than or equal to 75 mm.

2. The vehicle lamp assembly as claimed in Claim 1, further **characterized by** a reflective housing (1) having a reflective surface (111) and an installation space (110) bounded by said reflective surface (111), said lighting unit (2) being installed in said installation space (110), said reflective surface (111) reflecting part of light rays from said lighting unit (2) toward said lens (3), said first reflective member (51) protruding forwardly from said reflective housing (1).

3. The vehicle lamp assembly as claimed in Claim 1, **characterized in that** said at least one first light emitter (21) produces a low beam light, said at least one second light emitter (22) producing a high beam light.

4. The vehicle lamp assembly as claimed in Claim 1, **characterized in that** said lens (3) and said optical transparent member (4) are juxtaposed with each other along a left-right direction of said lighting unit (2), when the vehicle lamp assembly is mounted to a vehicle.

5. The vehicle lamp assembly as claimed in Claim 4, **characterized in that** said at least one first light emitter (21) includes at least two first light emitters (21) juxtaposed with each other in the left-right direction, said at least one second light emitter (22) includes at least two second light emitters (22) which are juxtaposed with each other in the left-right direction below said first light emitters (21), one of said at least two first light emitters (21) being disposed rearwardly of said lens (3), the other one of said at least two first light emitters (21) being disposed rearwardly of said optical transparent member (4), to both emit light rays to said optical transparent member (4) through said first and second reflective members (51, 52), one of said at least two second light emitters (22) being disposed rearwardly of said lens (3), the other one of said at least two second light emitters (22) being disposed rearwardly of said optical transparent member (4), to both emit light rays to said optical transparent member (4) through said light guide rod (53), said light guide rod (53) having a rear end proximal to the said at least two second light emitters (22) and a front end proximal to said optical transparent member (4) and said second reflective member (52).

## Patentansprüche

1. Eine Fahrzeuglampenbaugruppe, die zwei Fahrzeuglampen aufweist, wobei jede der zwei Fahrzeuglampen folgende Merkmale aufweist:
eine Beleuchtungseinheit (2);
eine Linse (3), die vor der Beleuchtungseinheit (2) angeordnet ist, um Lichtstrahlen, die von der Beleuchtungseinheit (2) empfangen werden, nach vorn auszustrahlen;
ein optisches transparentes Bauglied (4), das von einer Seite der Linse (2) seitwärts vorsteht; und
eine Lichtlenkeinheit (5), die zwischen der Beleuchtungseinheit (2) und dem optischen transparenten Bauglied (4) angeordnet ist, um einen Teil der von der Beleuchtungseinheit (2) emittierten Lichtstrahlen nach vorn zu dem optischen transparenten Bauglied (4) zu lenken,
wobei das optische transparent Bauglied (4) die von der Lichtlenkeinheit (5) empfangenen Lichtstrahlen nach vorn ausstrahlt, wodurch eine lichtemittierende Fläche der Fahrzeuglampe vergrößert wird,
wobei die Lichtlenkeinheit (5) ein erstes reflektierendes Bauglied (51), das an einer Position vor der Beleuchtungseinheit (2) und höher als dieselbe angeordnet ist, wenn die Fahrzeuglampenbaugruppe auf einem Fahrzeug befestigt ist, und ein zweites reflektierendes Bauglied (52) umfasst, das vor dem ersten reflektierenden Bauglied (51) liegt, wobei das zweite reflektierende Bauglied (52) ein vorderes Ende proximal zu dem optischen transparenten Bauglied (4) und ein hinteres Ende aufweist, das unterhalb eines vorderen Endes des ersten reflektierenden Bauglieds (51) liegt, wobei das erste reflektierende Bauglied (51) einen Teil des von der Beleuchtungseinheit (2) emittierten Lichts reflektiert und fokussiert, um eine virtuelle Lichtquelle zu bilden, wobei das zweite reflektierende Bauglied (52) Lichtstrahlen der virtuellen Lichtquelle zu dem optischen transparenten Bauglied (4) reflektiert,
wobei die Lichtlenkeinheit (5) ferner einen Lichtleitstab (53) umfasst, der zwischen der Beleuchtungseinheit (2) und dem transparenten Bauglied (4) angeordnet ist, um einen Teil der Lichtstrahlen von der Beleuchtungseinheit (2) zu dem optischen transparenten Bauglied (4) zu leiten,
wobei die Beleuchtungseinheit (2) zumindest einen ersten Licht-Emitter (21) und zumindest einen zweiten Licht-Emitter (22) umfasst, wobei das erste reflektierende Bauglied (51) einen Teil der Lichtstrahlen von dem zumindest einen ersten Licht-Emitter (21) zu dem zweiten reflektierenden Bauglied (52) reflektiert, wobei der Lichtleitstab (53) einen Teil der Lichtstrahlen von dem zumindest einen zweiten Licht-Emitter (22) zu dem optischen transparenten Bauglied (4) leitet,
wobei die optischen transparenten Bauglieder (4) der Fahrzeuglampen zwischen den Linsen (3) der Fahrzeuglampen angeordnet sind und ein Abstand (d) zwischen den optischen transparenten Baugliedern (4) kleiner als oder gleich 75 mm ist.

2. Die Fahrzeuglampenbaugruppe gemäß Anspruch 1, die ferner durch ein reflektierendes Gehäuse (1) gekennzeichnet ist, das eine reflektierende Oberfläche (111) und einen Einbauraum (110) aufweist, der durch die reflektierende Oberfläche (111) begrenzt ist, wobei die Beleuchtungseinheit (2) in dem Einbauraum (110) eingebaut ist, wobei die reflektierende Oberfläche (111) einen Teil der Lichtstrahlen von der Beleuchtungseinheit (2) in Richtung der Linse (3) reflektiert, wobei das erste reflektierende Bauglied (51) von dem reflektierenden Gehäuse (1) nach vorn vorsteht.

3. Die Fahrzeuglampenbaugruppe gemäß Anspruch 1, die **dadurch gekennzeichnet ist, dass** der zumindest eine erste Licht-Emitter (21) ein Abblendlicht erzeugt, der zumindest eine zweite Licht-Emitter (22) ein Fernlicht erzeugt.

4. Die Fahrzeuglampenbaugruppe gemäß Anspruch 1, die **dadurch gekennzeichnet ist, dass** die Linse (3) und das optische transparente Bauglied (4) einander entlang einer Links-Rechts-Richtung der Beleuchtungseinheit (2) gegenüberliegen, wenn die Fahrzeuglampenbaugruppe an einem Fahrzeug befestigt ist.

5. Die Fahrzeuglampenbaugruppe gemäß Anspruch 4, die **dadurch gekennzeichnet ist, dass** der zumindest eine erste Licht-Emitter (21) zumindest zwei erste Licht-Emitter (21) umfasst, die einander in der Links-Rechts-Richtung gegenüberliegen, wobei der zumindest eine zweite Licht-Emitter (22) zumindest zwei zweite Licht-Emitter (22), die einander in der Links-Rechts-Richtung gegenüberliegen, unterhalb der ersten Licht-Emitter (21) umfasst, wobei einer der zumindest zwei ersten Licht-Emitter (21) hinter der Linse (3) angeordnet ist, wobei der andere der zumindest zwei ersten Licht-Emitter (21) hinter dem optischen transparenten Bauglied (4) angeordnet ist, damit beide Lichtstrahlen zu dem optischen transparenten Bauglied (4) durch das erste und zweite reflektierende Bauglied (51, 52) emittieren, wobei einer der zumindest zwei zweiten Licht-Emitter (22) hinter der Linse (3) angeordnet ist, wobei der andere der zumindest zwei zweiten Licht-Emitter (22) hinter dem optischen transparenten Bauglied (4) angeordnet ist, damit beide Lichtstrahlen zu dem optischen transparenten Bauglied (4) durch den Lichtleitstab (53) emittieren, wobei der Lichtleitstab (53) ein hinteres Ende proximal zu den zumindest zwei zweiten Licht-Emittern (22) und ein vorderes Ende proximal zu dem optischen transparenten Bauglied (4) und dem zweiten reflektierenden Bauglied (52) aufweist.

## Revendications

1. Ensemble de lampes de véhicule comprenant deux lampes de véhicule, chacune des deux lampes de véhicule comprenant:
une unité d'éclairage (2);
une lentille (3) disposée devant ladite unité d'éclairage (2) pour rayonner vers l'avant les rayons de lumière reçus de ladite unité d'éclairage (2);
un élément optique transparent (4) ressortant latéralement d'un côté de ladite lentille (3); et
une unité de direction de lumière (5) disposée entre ladite unité d'éclairage (2) et ledit élément optique transparent (4) pour diriger vers l'avant une partie des rayons de lumière émis de ladite unité d'éclairage (2) vers ledit élément optique transparent (4),
ledit élément optique transparent (4) rayonnant vers l'avant les rayons de lumière reçus de ladite unité de direction de lumière (5), d'où une zone d'émission de lumière de ladite lampe de véhicule est augmentée,
dans lequel ladite unité de direction de lumière (5) comporte un premier élément réfléchissant (51) disposé en une position antérieure et supérieure à ladite unité d'éclairage (2) lorsque l'ensemble de lampes de véhicule est monté sur un véhicule, et un deuxième élément réfléchissant (52) qui est antérieur audit premier élément réfléchissant (51), ledit deuxième élément réfléchissant (52) présentant une extrémité avant proximale audit élément optique transparent (4), et une extrémité arrière qui qui se situe au-dessous d'une extrémité avant dudit premier élément réfléchissant (51), ledit premier élément réfléchissant (51) réfléchissant et focalisant une partie de la lumière émise par ladite unité d'éclairage (2) pour former une source de lumière virtuelle, ledit deuxième élément réfléchissant (52) réfléchissant les rayons de lumière de la source de lumière virtuelle vers ledit élément optique transparent (4),
dans lequel ladite unité de direction de lumière (5) comporte par ailleurs une tige de guidage de lumière (53) disposée entre ladite unité d'éclairage (2) et ledit élément transparent (4) destinée à guider une partie des rayons de lumière de ladite unité d'éclairage (2) vers ledit élément optique transparent (4),
dans lequel ladite unité d'éclairage (2) comporte au moins un premier émetteur de lumière (21) et au moins un deuxième émetteur de lumière (22), ledit premier élément réfléchissant (51) réfléchissant une partie des rayons de lumière dudit au moins un premier émetteur de lumière (21) vers ledit deuxième élément réfléchissant (52), ladite tige de guidage de lumière (53) guidant une partie des rayons de lumière dudit au moins un deuxième émetteur de lumière (22) vers ledit élément optique transparent (4),
dans lequel lesdits éléments optiques transparents (4) desdites lampes de véhicule sont disposés entre lesdites lentilles (3) desdites lampes de véhicule, et une distance (d) entre lesdits éléments optiques transparents (4) est inférieure ou égale à 75 mm.

2. Ensemble de lampes de véhicule selon la revendication 1, **caractérisé par** ailleurs par un logement réfléchissant (1) présentant une surface réfléchissante (111) et un espace d'installation (110) délimité par ladite surface réfléchissante (111), ladite unité d'éclairage (2) étant installée dans ledit espace d'installation (110), ladite surface réfléchissante (111) réfléchissant une partie des rayons de lumière de ladite unité d'éclairage (2) vers ladite lentille (3), ledit premier élément réfléchissant (51) ressortant vers l'avant à partir dudit logement réfléchissant (1).

3. Ensemble de lampes de véhicule selon la revendication 1, **caractérisé par le fait que** ledit au moins un premier émetteur de lumière (21) produit une lumière de croisement, ledit au moins un deuxième émetteur de lumière (22) produisant une lumière de route.

4. Ensemble de lampes de véhicule selon la revendication 1, **caractérisé par le fait que** ladite lentille (3) et ledit élément optique transparent (4) sont juxtaposés l'un à l'autre dans une direction gauche-droite de ladite unité d'éclairage (2) lorsque l'ensemble de lampes de véhicule est monté sur un véhicule.

5. Ensemble de lampes de véhicule selon la revendication 4, **caractérisé par le fait que** ledit au moins un premier émetteur de lumière (21) comporte au moins deux premiers émetteurs de lumière (21) juxtaposés l'un à l'autre dans la direction gauche-droite, ledit au moins un deuxième émetteur de lumière (22) comporte au moins deux deuxièmes émetteurs de lumière (22) qui sont juxtaposés l'un à l'autre dans la direction gauche-droite au-dessous desdits premiers émetteurs de lumière (21), l'un desdits au moins deux premiers émetteurs de lumière (21) étant disposé vers l'arrière de ladite lentille (3), l'autre desdits au moins deux premiers émetteurs de lumière (21) étant disposé vers l'arrière dudit élément optique transparent (4), de sorte que tous deux émettent des rayons de lumière vers ledit élément optique transparent (4) à travers lesdits premier et deuxième éléments réfléchissants (51, 52), un desdits au moins deux deuxièmes émetteurs de lumière (22) étant disposé vers l'arrière de ladite lentille (3), l'autre desdits au moins deux deuxièmes émetteurs de lumière (22) étant disposé vers l'arrière dudit élément optique transparent (4), de sorte que tous deux émettent des rayons de lumière vers ledit élément optique transparent (4) à travers ladite tige de guidage de lumière (53), ladite tige de guidage de lumière (53) présentant une extrémité arrière proximale auxdits au moins deux deuxièmes émetteurs de lumière (22) et une extrémité avant proximale audit élément optique transparent (4) et audit deuxième élément réfléchissant (52).
